# EUROPÄISCHE PATENTANMELDUNG

(11) **EP 3 065 078 A1**
(43) Veröffentlichungstag der Anmeldung: **07.09.2016**
(21) Anmeldenummer: 15464004.9
(22) Anmeldetag: 02.03.2015
(51) Int. Cl.: G06F 21/64, G06F 21/70, G06F 21/78

(54) **SCHUTZ VON SPEICHERINHALTEN EINES SPEICHERS EINES COMPUTERSYSTEMS UNTER VERWENDUNG EINER HASHFUNKTION**

(71) Anmelder: Siemens AG Österreich, 1210 Wien (AT)
(72) Erfinder: Fischer, Bernhard, 1120 Wien (AT); Ghameshlu, Majid, 1110 Wien (AT); Matschnig, Martin, 3430 Tulln (AT); Pitu, Ciprian-Leonard, 500371 Brasov (RO)
(74) Vertreter: Fierascu, Cosmina-Catrinel

(57) **Zusammenfassung**

Die Erfindung betrifft ein Verfahren zum Schutz von Speicherinhalten eines Speichers (MEM1, MEM2, MEM3) eines Computersystems unter Verwendung einer Hashfunktion. Um weniger Prozesor-Rechenzeit in Anspruch zu nehmen und weniger zusätzlichen Datentransfer zu generieren, ist ein Speicherkontroller (MC) vorgesehen, der eine Hash-Einheit (HU) umfasst, welche selbstständig jeweils eine kryptografische Prüfsumme (S) über bestimmte Speicherbereiche berechnet und mit Referenzwerten vergleicht, wobei bei einer Abweichung der Prüfsumme von einem Referenzwert eine Fehlermeldung generiert wird.

## Beschreibung

### Technisches Gebiet

Die Erfindung betrifft ein Verfahren zum Schutz von Speicherinhalten eines Speichers eines Computersystems unter Verwendung einer Hashfunktion.

Der Speicher kann dabei aus nur einer Speichereinheit oder aus mehreren, insbesondere mehreren physischen, Speichereinheiten bestehen.

Eine Hashfunktion (auch Streuwertfunktion) ist eine Abbildung, die eine große Eingabemenge auf eine kleinere Zielmenge (die Hashwerte) abbildet. Dabei kann die Eingabemenge auch Elemente mit unterschiedlichen Längen enthalten, die Elemente der Zielmenge haben dagegen meist eine feste Länge. Die Hashwerte werden auch als Prüfsumme bezeichnet.

Das erfindungsgemäße Verfahren ist insbesondere dazu geeignet, in sicherheitsrelevanten eingebetteten Systemen (embedded systems) eingesetzt zu werden. Ein eingebettetes System bezeichnet einen elektronischen Rechner oder Computer, der in einen technischen Kontext eingebunden (eingebettet) ist. Dabei übernimmt der Rechner etwa Überwachungs-, Steuerungs- oder Regelfunktionen oder ist für eine Form der Daten- bzw. Signalverarbeitung zuständig. Meist wird dabei eine gemischte Hardware-Software-Implementierung gewählt, welche die große Flexibilität von Software mit der Leistungsfähigkeit der Hardware vereint. Die Software dient dabei sowohl zur Steuerung des eingebetteten Systems selbst als auch gegebenenfalls zur Interaktion des eingebetteten Systems mit der Außenwelt über definierte Schnittstellen oder Protokolle.

### Stand der Technik

Die Verwendung von Hashfunktionen in Computersystemen ist für einige Anwendungen bereits bekannt.

In der US 2009/0287901 A1 "System and Method for Content Replication Detection and Elimination in Main Memory" wird ein Memory Controller, also ein Speicherkontroller, mit integrierter Hashfunktion beschrieben, wo die Prüfsumme dazu benutzt wird, doppelt vorhandene Speicherinhalte zu identifizieren.

In der US 2007/0234009 A1 "Prozessor having a Dedicated Hash Unit Integrated Within" wird ein Prozessor mit Hashfunktion beschrieben, wobei Hashing hier die Optimierung der Zugriffe auf einen Cache-Bereich zum Ziel hat.

Auch die Verwendung von signaturbildenden kryptografischen Hashfunktionen zur Sicherung eines Speicherbereichs ist eine bereits bekannte Methode. Eine kryptografische Hashfunktion ist kollisionsresistent oder eine Einwegfunktion (oder beides).

Eine Hashfunktion h liefert zu einem Dokument x, aufgefasst als beliebig lange Bitfolge, eine Bitfolge h(x) fester Länge. Falls zwei Dokumente x1 und x2 verschiedene Hashwerte h(x1) ungleich h(x2) haben, ist gewiss, dass die Dokumente unterschiedlich sind. Die Umkehrung gilt jedoch nicht, da es viel mehr verschiedene mögliche Dokumente als mögliche Hashwerte (= Prüfsummen) gibt. Zwei ungleiche Dokumente x1, x2 mit gleichem Hashwert h(x1)=h(x2) werden als Kollision bezeichnet. Soweit der Bereich der (zulässigen) Dokumente nicht eingeschränkt wird, kann eine Hashfunktion also nicht echt kollisionsfrei sein. Inwieweit es zumindest in der praktischen Anwendung dennoch gerechtfertigt ist, aus gleichen Hashwerten auf gleiche Dokumente zu schließen, hängt von der verwendeten Hashfunktion ab.

Eine Einwegfunktion ist eine mathematische Funktion, die komplexitätstheoretisch "leicht" berechenbar, aber "schwer" umzukehren ist. In einem erweiterten Sinn werden auch Funktionen so bezeichnet, zu denen bisher keine in angemessener Zeit praktisch ausführbare Umkehrung bekannt ist.

Es existieren standardisierte kryptografische Hashfunktionen, wie z.B. MD5, SHA256 oder SHA512. Dabei werden Speicherbereiche vor oder während des Schreibens in den Speicher mittels einer Hashfunktion signiert und die Prüfsumme an sicherer Stelle als Referenz abgelegt. Im Falle einer verschlüsselten kryptografischen Hashfunktion wird auch noch ein geheimer Schlüssel mit einbezogen, der aus der Prüfsumme eine sogenannte Signatur bildet. Dadurch wird es einem Angreifer erschwert, einen Speicherbereich zusammen mit der Prüfsumme zu manipulieren, da er den/die nötigen Schlüssel nicht kennt.

Während der Laufzeit werden die gesicherten Speicherabschnitte in periodischen Abständen ausgelesen und die jeweilige Prüfsumme bzw. Signatur neu berechnet, um sie mit der Referenz vergleichen zu können. Diese Methode wird zum Beispiel in der Veröffentlichung "Runtime Execution Monitoring (REM) to Detect and Prevent Malicious Code Execution", A. M. Fiskran und R.B. Lee, IEEE 30th International Conference on Computer Design (ICCD) 2004, Seiten 452-457, beschrieben.

Bisher werden diese, zum Teil sehr rechenintensiven Operationen, entweder in Software abgebildet oder durch eigene Hardware-Module realisiert. Im ersten Fall wird für die Berechnung Prozessor-Rechenzeit, also CPU-Rechenzeit, benötigt, in beiden Fällen wird zusätzlicher Datentransfer generiert.

### Darstellung der Erfindung

Es ist eine Aufgabe der vorliegenden Erfindung, ein Verfahren zum Schutz von Speicherinhalten eines Speichers eines Computersystems unter Verwendung einer Hashfunktion zur Verfügung zu stellen, welches weniger CPU-Rechenzeit in Anspruch nimmt. Im Vergleich zu eigenen Hardware-Modulen zur Ausführung der Hashfunktion sowie im Vergleich zur Verwendung des Hauptprozessors zur Ausführung der Hashfunktion soll weniger zusätzlichen Datentransfer im Computersystem erzeugt werden.

Mit dem erfindungsgemäßen Verfahren soll beispielsweise sichergestellt werden, dass die Anwender-Software eines eingebetteten Systems nicht manipuliert wird. Insbesondere soll garantiert werden, dass die Software nur aus vertrauenswürdigen Quellen stammt und während der Laufzeit nicht verändert werden kann bzw. sollen Veränderungen des Programmcodes während der Laufzeit erkannt werden, um Gegenmaßnahmen einleiten zu können. Dies wird in der Informatik mit dem Begriff "Secure Code Execution" bezeichnet. Auch der statische Speicherinhalt, wie Konfigurationsdateien, die in der Regel besonders schützenswert sind, soll geschützt werden, man spricht hier von "Integrity Protection".

Die gestellte Aufgabe wird durch ein Verfahren mit den Merkmalen des Patentanspruchs 1 gelöst, indem ein Speicherkontroller vorgesehen ist, der eine Hash-Einheit umfasst, welche selbstständig jeweils eine kryptografische Prüfsumme über bestimmte Speicherbereiche berechnet und mit Referenzwerten vergleicht, wobei bei einer Abweichung der Prüfsumme von einem Referenzwert eine Fehlermeldung generiert wird.

Der Speicherkontroller (auch Memory Controller) ist ein Hardware-Bauteil (z.B. ein Chip), der bei Computersystemen den Datenfluss zwischen Prozessor einerseits und Arbeitsspeicher (oder weiteren Speichern) andererseits regelt. Untergebracht ist der Speicherkontroller entweder direkt im Prozessor (Integrated Memory Controller - IMC) oder auf dem Mainboard.

Dadurch, dass die Hash-Einheit Teil des - in der Regel ohnehin vorhandenen - Speicherkontrollers ist und selbstständig die notwendigen Berechnungen durchführt, wird für die Berechnung der Hash-Funktionen keine CPU-Zeit benötigt. Auch fällt wenig zusätzlicher Datenverkehr an, weil die Daten nur zwischen dem Speicher, insbesondere dem Arbeitsspeicher, und dem Speicherkontroller ausgetauscht werden müssen, also in der Regel nicht über einen Bus des Computersystems, wie dies bei einem eigenen Bauteil zur Berechnung der Hash-Funktionen oder bei Verwendung des Prozessors der Fall wäre.

Aufgrund der Fehlermeldung können dann Gegenmaßnahmen gegen eine erfolgte Manipulation des Speichers eingeleitet werden.

Am einfachsten kann die Fehlermeldung, die von der Hash-Einheit bei einer Abweichung der Prüfsumme von einem Referenzwert generiert wird, zur Weiterverarbeitung an den Prozessor des Computersystems weitergeleitet werden, etwa in Form eines Interrupts.

Der Prozessor kann dann geeignete Gegenmaßnahmen treffen. So kann vorgesehen sein, dass der Prozessor den Zugriff auf den fehlerhaften Speicherbereich so lange unterbindet, bis der Speicherinhalt dieses Bereichs zurückgesetzt ist. Oder es wäre auch denkbar, dass die gesamte Speichereinheit, auf der sich der fehlerhafte Speicherbereich befindet, gelöscht wird, also ein sogenannter zero-erase durchgeführt wird.

Es wäre aber auch möglich, eine eigene Software zur Bearbeitung der Fehlermeldungen zu verwenden, etwa eine gegen Manipulationen gesicherte Software. Bekannte derartige Software teilt das Prozessorsystem (oder die einzelnen, auf diesem Prozessor ablaufenden Prozesse (Programme)) logisch, also virtuell, in zwei Zonen oder "worlds" auf, eine sichere Zone oder "secure world" und eine normale Zone oder "normal world". Die sichere Zone könnte dann auch die Bearbeitung der Fehlermeldungen der Hash-Einheit übernehmen. Das Konzept der Aufteilung in zwei virtuelle Zonen wird etwa durch die ARM® TrustZone® Technologie verwirklicht.

Von Vorteil ist, wenn die Berechnung der Prüfsumme für einen bestimmten Speicherbereich dann erfolgt, wenn der zugehörige Speicher unbenutzt ist, also keine Zugriffe auf den Speicher von anderen Einheiten des Computersystems erfolgen. Der Speicherkontroller nutzt also Phasen, in denen der Speicher unbenutzt ist, um die jeweiligen Speicherbereiche auszulesen und intern die Prüfsumme bzw. Signatur zu bilden. Dadurch werden andere Prozesse, die auf diesen Speicher angewiesen sind, nicht verzögert.

Wenn der Speicherkontroller eine anteilige Speicher-Bandbreite für die Berechnung der Prüfsumme reserviert, dann ist damit eine maximale Zeitdauer festgelegt, innerhalb derer eine Manipulation des Speichers spätestens erkannt wird. Die Hash-Einheit würde also laufend auf den Speicher zugreifen und Prüfsummen berechnen, auch wenn andere Einheiten des Computersystems gerade auf den Speicher, bzw. die gleiche Speichereinheit, zugreifen. Wenn andere Einheiten des Computersystems später wieder nicht auf den Speicher zugreifen, steht der Hash-Einheit die gesamte Bandbreite des Speichers zur Verfügung.

Damit die Referenzwerte der kryptografischen Prüfsumme selbst möglichst nicht manipuliert wenden können, kann vorgesehen sein, dass die Referenzwerte der kryptografischen Prüfsumme im Speicherkontroller in einem abgesicherten Speicherbereich abgespeichert werden.

Bei schlüsselabhängigen Hashfunktionen können auch die Schlüssel zur Verschlüsselung der Prüfsummen im Speicherkontroller im abgesicherten Speicherbereich abgespeichert werden. Es werden also zuerst die Prüfsummen mittels eines Schlüssels verschlüsselt und dann die verschlüsselten Prüfsummen, die auch als Signaturen bezeichnet werden, als Referenzwert abgespeichert.

In Zusammenhang mit dem abgesicherten Speicherbereich des Speicherkontrollers besteht eine Ausführungsvariante des erfindungsgemäßen Verfahrens darin, dass der abgesicherte Speicherbereich nur über zuvor als sicher eingestufte Einheiten des Computersystems abgefragt werden kann. Eine solche Einstufung der Einheiten des Computersystems in sichere und nicht sichere Einheiten kann zum Beispiel über eine bereits oben beschriebene Software erfolgen, die auf dem Prozessor ablaufende Prozesse (Programme) und die dafür benötigten Einheiten logisch, also virtuell, in zwei Zonen oder "worlds" aufteilt, eine sichere Zone oder "secure world" und eine normale Zone oder "normal world". Der Speicherkontroller erkennt dann z.B. über ein Seitenband-Signal des Busses oder über ein eigenes Bit, ob ein Zugriff auf den abgesicherten Speicherbereich von einer vertrauenswürdigen, also sicheren, Quelle kommt oder nicht.

Ein Computersystem zur Durchführung des erfindungsgemäßen Verfahrens umfasst zumindest einen Prozessor, einen Speicherkontroller und einen Speicher, auf den über den Speicherkontroller zugegriffen werden kann. Der Speicherkontroller umfasst eine Hash-Einheit, welche so ausgebildet ist, dass diese selbstständig jeweils eine kryptografische Prüfsumme über bestimmte Speicherbereiche berechnen und mit Referenzwerten vergleichen kann, wobei eine Leitung zwischen Hash-Einheit und Prozessor vorgesehen ist, über welche bei einer Abweichung der Prüfsumme von einem Referenzwert eine Fehlermeldung von der Hash-Einheit an den Prozessor gesendet werden kann.

Im Speicherkontroller kann ein abgesicherter Speicherbereich vorgesehen sein, in welchem die Referenzwerte der kryptografischen Prüfsumme abgespeichert werden können. Wie bereits oben erläutert, können dort auch die Schlüssel von schlüsselabhängigen Hashfunktionen sowie die verschlüsselten Prüfsummen (Signaturen) abgelegt werden.

Das erfindungsgemäße Computersystem kann als anwendungsspezifische, integrierte Schaltung (ASIC) ausgeführt sein, zum Beispiel als sogenanntes Field Programmable Gate Array (FPGA). Insbesondere kann das erfindungsgemäße Computersystem auch als Ein-Chip-System oder System-on-Chip (SoC) hergestellt werden.

Die Erfindung wird in der Regel unter Verwendung eines Computerprogramms verwirklicht werden. Dementsprechend ist ein Computerprogrammprodukt vorgesehen, welches ein Programm umfasst, das direkt in eine Hash-Einheit eines Speicherkontrollers eines Computersystems ladbar ist, mit Programm-Mitteln, um alle jene Schritte des erfindungsgemäßen Verfahrens auszuführen, die von der Hash-Einheit ausgeführt werden, wenn das Programm ausgeführt wird.

Die gegenständliche Erfindung dient zur Sicherung von kritischen Speicherbereichen eines Speichers gegen böswillige Manipulationen. Im Gegensatz zu bekannten Lösungen, wo die Signaturprüfung mit Hilfe eines Prozessors erfolgt, kann durch die erfindungsgemäße Integration der Hash-Funktionalität direkt im Speicherkontroller das restliche Computersystem deutlich entlastet werden.

Die erfindungsgemäße Lösung kann auch in Kombination mit sogenannten error-correcting codes (ECC) verwendet werden. Ein error-correcting code ist ein Algorithmus um eine Abfolge von Zahlen so auszudrücken, dass auftretende Fehler in der Abfolge später erkannt und - mit Einschränkungen - auf Basis der restlichen Zahlen korrigiert werden können. Bei der error-correcting code Methode steht die Sicherung gegen zufällig auftretende Bit-Fehler, z.B. aufgrund von Strahlung, im Vordergrund.

### Kurzbeschreibung der Figuren

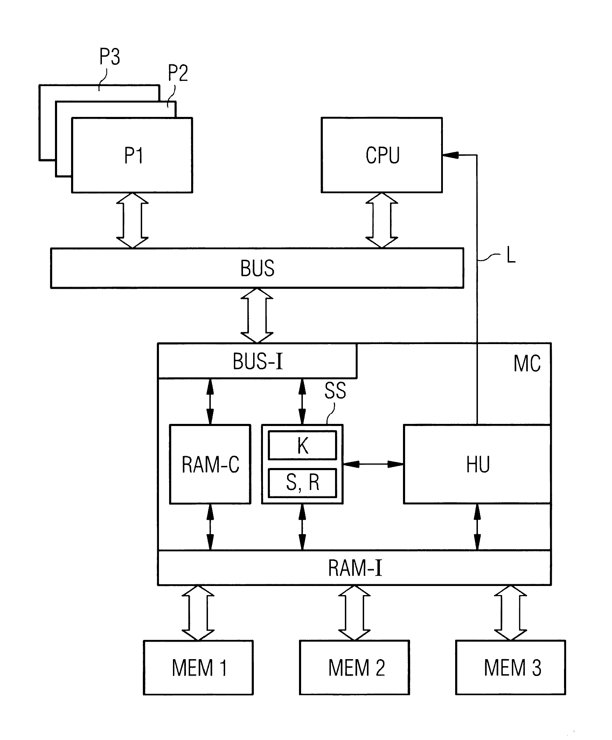

Zur weiteren Erläuterung der Erfindung wird im nachfolgenden Teil der Beschreibung auf die Figur Bezug genommen, aus der weitere vorteilhafte Ausgestaltungen, Einzelheiten und Weiterbildungen der Erfindung zu entnehmen sind. Die Figur ist beispielhaft zu verstehen und soll den Erfindungscharakter zwar darlegen, ihn aber keinesfalls einengen oder gar abschließend wiedergeben.

Die Figur zeigt ein Blockdiagramm eines erfindungsgemäßen Computersystems. Für das Computersystem sind in der Figur nur die für die Erfindung wesentlichen Einheiten dargestellt. Es kann und wird in der Regel darüber hinaus weitere Einheiten, wie Ein-/Ausgabeeinheiten, weitere Controller, zusätzliche Schnittstellen, weitere Prozessoren, Speicher, enthalten.

### Ausführung der Erfindung

In der Figur ist ein Computersystem dargestellt mit einem als Hauptprozessor dienenden Prozessor CPU, einem Arbeitsspeicher (RAM), der aus mehreren Speichereinheiten MEM1, MEM2, MEM3, besteht, sowie einem Speicherkontroller MC, der den Speichereinheiten MEM1, MEM2, MEM3 vorgeschaltet und über einen Systembus BUS mit dem Prozessor CPU verbunden ist.

Mit dem Begriff Systembus fasst man die verschiedenen Datenschienen (Busse) zusammen, über die in einem Mikrorechner der Prozessor CPU mit seiner Umgebung kommuniziert. In der Regel werden drei solcher Busse unterschieden: der Datenbus, der Adressbus und der Steuerbus. Der Systembus BUS kann als sogenannte Busmatrix ausgeführt sein, die parallele Zugriffswege von mehreren Master-Einheiten auf mehrere Slave-Einheiten bereitstellt.

Der Systembus BUS bindet hier auch mehrere Peripherieeinheiten P1, P2, P3, z.B. Slave-Einheiten. an das Computersystem an.

Der Speicherkontroller MC weist in üblicher Weise zum Systembus BUS hin ein Bus-Interface BUS-I und zu den Speichereinheiten MEM1, MEM2, MEM3 hin ein RAM Interface RAM-I auf. Dadurch verbindet der Speicherkontroller MC den Prozessor CPU mit den Speichereinheiten MEM1, MEM2, MEM3. Ein RAM Controller RAM-C des Speicherkontrollers MC steht sowohl mit dem Bus-Interface BUS-I als auch mit dem RAM Interface RAM-I in Verbindung. Gleiches gilt für den abgesicherten Speicherbereich SS, in welchem die Prüfsummen (Signaturen) S und die Adressen R der zugehörigen Speicherbereiche der einzelnen Speichereinheiten MEM1, MEM2, MEM3 abgelegt sind. Für die Schlüssel K von schlüsselabhängigen Hashfunktionen ist ebenfalls ein eigener Bereich im abgesicherten Speicherbereich SS vorgesehen.

Ein Zugriff auf den abgesicherten Speicherbereich SS des Speicherkontrollers MC kann von außerhalb des Speicherkontrollers MC nur über das Bus-Interface BUS-I erfolgen, das nur Zugriffe von vertrauenswürdigen Busteilnehmern zulässt. Dies kann etwa durch die TrustZone® Technologie sichergestellt werden.

Der abgesicherte Speicherbereich SS des Speicherkontrollers MC ist weiters mit der Hash-Einheit HU verbunden, welche ebenfalls im Inneren des Speicherkontrollers MC angeordnet ist. Die Hash-Einheit HU ist darüber hinaus mit dem RAM Interface RAM-I verbunden, um auf die Speichereinheiten MEM1, MEM2, MEM3 zugreifen zu können. Über eine Leitung L ist die Hash-Einheit HU direkt mit dem Prozessor CPU verbunden, um Fehlermeldungen, wenn eine Signatur als nicht korrekt erkannt worden ist, als Interrupt an den Prozessor CPU senden zu können. Der Prozessor CPU kann dann geeignete Gegenmaßnahmen vornehmen. So kann der Prozessor CPU einen Zugriff auf einen fehlerhaften Speicherbereich so lange verhindern, bis eine sichere Anwendung den Speicherinhalt zurücksetzt.

Die Hash-Einheit HU berechnet nun selbstständig für einzelne Speicherbereiche der Speichereinheiten MEM1, MEM2, MEM3 jeweils eine kryptografische Prüfsumme S, verschlüsselt diese und speichert die so entstandene verschlüsselte Prüfsumme S (Signatur) dieses Speicherbereichs als Referenzwert im abgesicherten Speicherbereich SS des Speicherkontrollers MC ab, ebenso wie den zugehörigen Schlüssel K. Die Adresse R des untersuchten Speicherbereichs oder eine sonstige Kennzeichnung dieses Speicherbereichs wird ebenso abgespeichert. Wenn für diesen Speicherbereich dann später wieder die kryptografische Prüfsumme S gebildet wird, dann wird diese durch die Hash-Einheit HU mit dem abgespeicherten Referenzwert verglichen. Sind neu berechnete Prüfsumme und Referenzwert gleich, so ist dieser Speicherbereich in Ordnung. Gibt es eine Abweichung, so sendet die Hash-Einheit HU einen Interrupt an den Prozessor CPU, der dann Gegenmaßnahmen setzt.

Als Hashfunktionen verwendet die Hash-Einheit HU eingangs genannte kryptografische Hashfunktionen, wie z.B. basierend auf MD5, SHA256 oder SHA512, insbesondere basierend auf Letzterer.

### Bezugszeichenliste:

- BUS: Systembus
- BUS-I: Bus-Interface
- CPU: Prozessor
- HU: Hash-Einheit (hashing unit)
- K: Schlüssel (keys)
- L: Leitung zwischen Hash-Einheit HU und Prozessor CPU
- MC: Speicherkontroller (memory controller)
- MEM1: erste Speichereinheit (memory unit)
- MEM2: zweite Speichereinheit (memory unit)
- MEM3: dritte Speichereinheit (memory unit)
- P1: erste Peripherieeinheit (peripheral unit)
- P2: zweite Peripherieeinheit (peripheral unit)
- P3: dritte Peripherieeinheit (peripheral unit)
- R: Adressen der Speicherbereiche der Speichereinheiten (range)
- RAM-C: RAM Controller
- RAM-I: RAM Interface
- S: Prüfsumme (signature)
- SS: abgesicherter Speicherbereich (secure storage)

## Patentansprüche

1. Verfahren zum Schutz von Speicherinhalten eines Speichers (MEM1, MEM2, MEM3) eines Computersystems unter Verwendung einer Hashfunktion, **dadurch gekennzeichnet, dass** ein Speicherkontroller (MC) vorgesehen ist, der eine Hash-Einheit (HU) umfasst, welche selbstständig jeweils eine kryptografische Prüfsumme (S) über bestimmte Speicherbereiche berechnet und mit Referenzwerten vergleicht, wobei bei einer Abweichung der Prüfsumme von einem Referenzwert eine Fehlermeldung generiert wird.

2. Verfahren nach Anspruch 1, **dadurch gekennzeichnet, dass** die Fehlermeldung an den Prozessor (CPU) des Computersystems weitergeleitet wird.

3. Verfahren nach Anspruch 2, **dadurch gekennzeichnet, dass** der Prozessor (CPU) den Zugriff auf den fehlerhaften Speicherbereich so lange unterbindet, bis der Speicherinhalt dieses Bereichs zurückgesetzt ist.

4. Verfahren nach einem der Ansprüche 1 bis 3, **dadurch gekennzeichnet, dass** die Fehlermeldung durch eine gegen Manipulationen gesicherte Software bearbeitet wird.

5. Verfahren nach einem der Ansprüche 1 bis 4, **dadurch gekennzeichnet, dass** die Berechnung der Prüfsumme (S) für einen bestimmten Speicherbereich dann erfolgt, wenn der zugehörige Speicher (MEM1, MEM2, MEM3) unbenutzt ist.

6. Verfahren nach einem der Ansprüche 1 bis 5, **dadurch gekennzeichnet, dass** der Speicherkontroller (MS) eine anteilige Speicher-Bandbreite für die Berechnung der Prüfsumme (S) reserviert.

7. Verfahren nach einem der Ansprüche 1 bis 6, **dadurch gekennzeichnet, dass** die Referenzwerte der kryptografischen Prüfsumme (S) im Speicherkontroller (MC) in einem abgesicherten Speicherbereich (SS) abgespeichert werden.

8. Verfahren nach Anspruch 7, **dadurch gekennzeichnet, dass** bei schlüsselabhängigen Hashfunktionen auch die Schlüssel (K) zur Verschlüsselung der Prüfsummen (S) im Speicherkontroller (MC) im abgesicherten Speicherbereich (SS) abgespeichert werden.

9. Verfahren nach einem der Ansprüche 7 oder 8, **dadurch gekennzeichnet, dass** der abgesicherte Speicherbereich (SS) nur über zuvor als sicher eingestufte Einheiten des Computersystems abgefragt werden kann.

10. Computersystem zur Durchführung des Verfahren nach einem der Ansprüche 1 bis 9, umfassend zumindest einen Prozessor (CPU), einen Speicherkontroller (MC) und einen Speicher (MEM1, MEM2, MEM3), auf den über den Speicherkontroller (MC) zugegriffen werden kann, **dadurch gekennzeichnet, dass** der Speicherkontroller (MC) eine Hash-Einheit (HU) umfasst, welche so ausgebildet ist, dass diese selbstständig jeweils eine kryptografische Prüfsumme (S) über bestimmte Speicherbereiche berechnen und mit Referenzwerten vergleichen kann, wobei eine Leitung (L) zwischen Hash-Einheit (HU) und Prozessor (CPU) vorgesehen ist, über welche bei einer Abweichung der Prüfsumme von einem Referenzwert eine Fehlermeldung von der Hash-Einheit (HU) an den Prozessor (CPU) gesendet werden kann.

11. Computersystem nach Anspruch 10, **dadurch gekennzeichnet, dass** im Speicherkontroller (MC) ein abgesicherter Speicherbereich (SS) vorgesehen ist, in welchem die Referenzwerte der kryptografischen Prüfsumme (S) abgespeichert werden können.

12. Computerprogrammprodukt, welches ein Programm umfasst, das direkt in eine Hash-Einheit (HU) eines Speicherkontrollers (MC) eines Computersystems ladbar ist, mit Programm-Mitteln, um alle Schritte des Verfahrens nach einem der Ansprüche 1, 2 oder 5 bis 9 auszuführen, wenn das Programm ausgeführt wird.
